# EUROPEAN PATENT APPLICATION

(11) **EP 4 593 125 A1**
(43) Date of publication of application: **30.07.2025**
(21) Application number: 25150604.4
(22) Date of filing: 08.01.2025
(51) Int. Cl.: H01M 4/86, H01M 4/88, H01M 8/1213, H01M 8/12

(54) **SOLID OXIDE ELECTROCHEMICAL CELL CONTAINING STRONTIUM GETTER**

(30) Priority: 12.01.2024 US 202418412150
(71) Applicant: Bloom Energy Corporation, San Jose, CA 95134 (US)
(72) Inventor: GEISENDORFER, Nicholas Ryan, San Jose, CA 95134 (US); XIAO, Guoliang, San Jose, CA 95134 (US); RAILSBACK, Justin G., San Jose, CA 95134 (US); ARMSTRONG, Tad, San Jose, CA 95134 (US)
(74) Representative: Wichmann, Hendrik

(57) **Abstract**

A solid oxide electrochemical cell (400) includes a solid oxide electrolyte (5), a fuel-side electrode (7) located on a first side of the solid oxide electrolyte (5), and an air-side electrode (3) located on a second side of the solid oxide electrolyte (5). The air-side electrode (3) includes a strontium getter material, a current collector layer (34) and a functional layer (32) located between the current collector layer (34) and the second side of the solid oxide electrolyte (5).

## Description

### FIELD OF THE INVENTION

The embodiments of the present invention generally relate to solid oxide electrochemical cells, such as solid oxide electrolyzer cells (SOECs), and more particularly to SOECs containing a strontium (Sr) getter material which reduces or prevents reaction of Sr in the air electrode with solid oxide electrolyte materials.

### BACKGROUND OF THE INVENTION

A SOEC stack includes SOECs separated by interconnects. Each SOEC comprises a solid oxide electrolyte, an air-side electrode located on a first side of the solid oxide electrolyte and a fuel-side electrode located on an opposite side of the solid oxide electrolyte.

### SUMMARY

In one embodiment, a solid oxide electrochemical cell includes a solid oxide electrolyte, a fuel-side electrode located on a first side of the solid oxide electrolyte, and an air-side electrode located on a second side of the solid oxide electrolyte. The air-side electrode includes a strontium getter material, a current collector layer and a functional layer located between the current collector layer and the second side of the solid oxide electrolyte.

In another embodiment, a method of making solid oxide electrochemical cell comprises forming a fuel-side electrode on a first side of a solid oxide electrolyte, and forming an air-side electrode on a second side of the solid oxide electrolyte. The air-side electrode includes a strontium getter material, a current collector layer and a functional layer located between the current collector layer and the second side of the solid oxide electrolyte.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
FIG. 1A is a perspective view of a SOEC stack according to various embodiments of the present invention.
FIG. 1B is a cross-sectional view of a portion of the stack of FIG. 1A.
FIG. 2A is a plan view of an air side of an interconnect according to various embodiments of the present invention.
FIG. 2B is a plan view of a fuel side of the interconnect of FIG. 2A.
FIG. 3A is a plan view of an air side of a SOEC according to various embodiments of the present invention.
FIG. 3B is a plan view of a fuel side of the SOEC of FIG. 3A.
FIGS. 4A and 4B are side cross-sectional views of an exemplary SOEC stack portion including an SOEC with a Sr getter according to various embodiments of the present invention.
FIGS. 5A and 5B constitute images and plots illustrating the prevention of SrZrOs formation in an electrolyte according to a first embodiment of the invention.
FIGS. 6A, 6B and 6C constitute images and plots illustrating the prevention of SrZrOa formation in an electrolyte according to a second embodiment of the invention.

### DETAILED DESCRIPTION OF THE EXEMPLARY EMBODIMENTS

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Where a range of values is provided, it is understood that each intervening value between and including the upper and lower limit of that range and any other stated or intervening value in that stated range is encompassed within the invention. In addition, weight percentages (wt.%) and atomic percentages (at.%) as used herein respectively refer to a percent of total weight or a percent of a total number of atoms of a corresponding composition.

Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

The term "electrolyzer cell stack" or "electrolyzer stack" as used herein, means a plurality of stacked electrolyzer cells separated by interconnect plates. The electrolyzer cell stack or electrolyzer stack, as used herein, can include end plates which are connected to power conditioning equipment and the power (i.e., electricity) input of the stack. An electrolyzer cell stack or electrolyzer stack may also be referred to as an electrolyzer column or electrolyzer cell column.

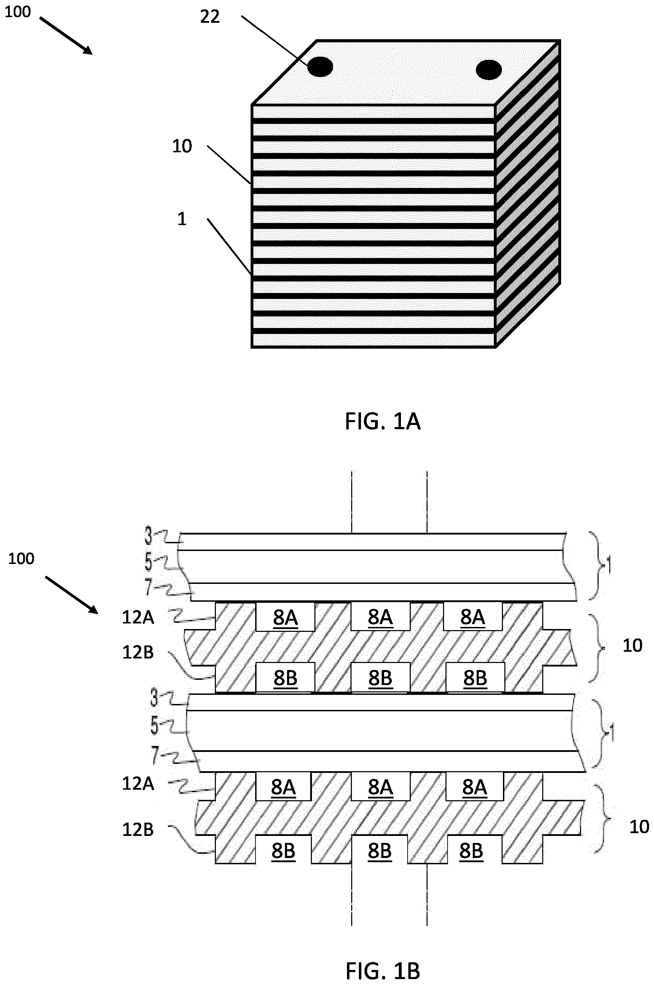

FIG. 1A is a perspective view of an electrolyzer cell stack 100, and FIG. 1B is a sectional view of a portion of the stack 100 according to various embodiments of the present invention. Referring to FIGS. 1A and 1B, the stack 100 may be a solid oxide electrolyzer cell (SOEC) stack that includes solid oxide electrolyzer cells 1 separated by interconnects 10. Referring to FIG. 1B, each electrolyzer cell 1 comprises an air-side electrode 3, a solid oxide electrolyte 5, and a fuel-side electrode 7.

Electrolyzer cell stacks are frequently built from a multiplicity of electrolyzer cells 1 in the form of planar elements, tubes, or other geometries. Although the electrolyzer cell stack 100 in FIG. 1A is vertically oriented, electrolyzer cell stacks may be oriented horizontally or in any other direction. For example, water or steam may be provided through water conduits 22 (e.g., water/steam riser openings) formed in each interconnect 10 and electrolyzer cell 1, while oxygen (e.g., air) may be provided from the side of the stack and flow between air side ribs of the interconnects 10.

Each interconnect 10 electrically connects adjacent electrolyzer cells 1 in the stack 100. In particular, an interconnect 10 may electrically connect the fuel-side electrode 7 of one electrolyzer cell 1 to the air-side electrode 3 of an adjacent electrolyzer cell 1. FIG. 1B illustrates that the lower electrolyzer cell 1 is located between two interconnects 10. A Ni mesh (not shown) may be used to electrically connect the interconnect 10 to the fuel-side electrode 7 of an adjacent electrolyzer cell 1.

Each interconnect 10 includes fuel-side ribs 12A that at least partially define fuel channels 8A and air-side ribs 12B that at least partially define oxidant (e.g., air) channels 8B. Interconnect 10 may operate as a separator that separates water/steam flowing to the fuel-side electrode of one cell 1 in the stack from oxygen flowing from the air-side electrode of an adjacent cell 1 in the stack. At either end of stack 100, there may be an air end plate or fuel end plate (not shown).

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron (e.g., 5 wt.% iron), optionally 1 or less weight percent yttrium and balance chromium alloy), and may electrically connect the fuel-side electrode 7 of one electrolyzer cell 1 to the air-side electrode 3 of an adjacent electrolyzer cell 1.

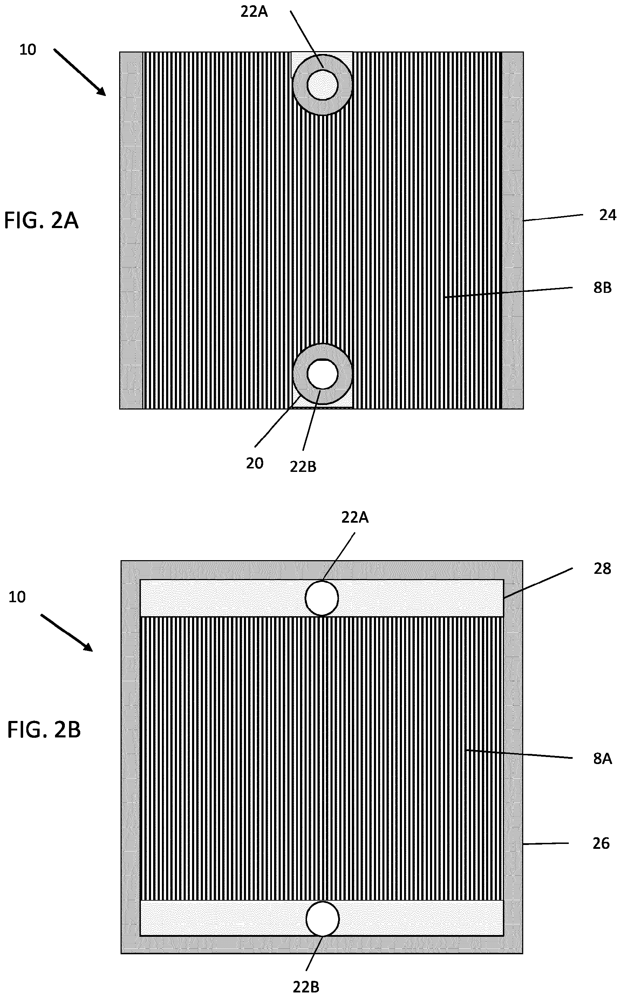

FIG. 2A is a top view of the air side of an interconnect 10, and FIG. 2B is a top view of the fuel side of interconnect 10 according to various embodiments of the present invention. Referring to FIGS. 1B and 2A, the air side includes the air channels 8B that extend from opposing first and second edges of the interconnect 10. Oxygen flows through the air channels 8B along the surface of the air-side electrode 3 of an adjacent electrolyzer cell 1. Ring seals 20 may surround fuel holes 22A, 22B of the interconnect 10, to prevent water/steam from contacting the air-side electrode 3. Strip-shaped peripheral seals 24 are located on peripheral portions of the air side of the interconnect 10. The seals 20, 24 may be formed of a glass or glass-ceramic material. The peripheral portions may be an elevated plateau which does not include ribs or channels. The surface of the peripheral regions may be coplanar with tops of the ribs 12B.

Referring to FIGS. 1B and 2B, the fuel side of interconnect 10 may include fuel channels 8A and fuel manifolds 28. Water/steam flows from one of the fuel holes 22A (e.g., inlet fuel hole that forms part of the fuel inlet riser), into the adjacent manifold 28, through the fuel channels 8A, and along the surface of a fuel-side electrode 7 of an adjacent electrolyzer cell 1. Excess or unreacted water/steam may flow into the other fuel manifold 28 and then into the outlet fuel hole 22B. A frame seal 26 is disposed on a peripheral region of the fuel side of the interconnect 10. The peripheral region may be an elevated plateau which does not include ribs or channels. The surface of the peripheral region may be coplanar with tops of the ribs 12A.

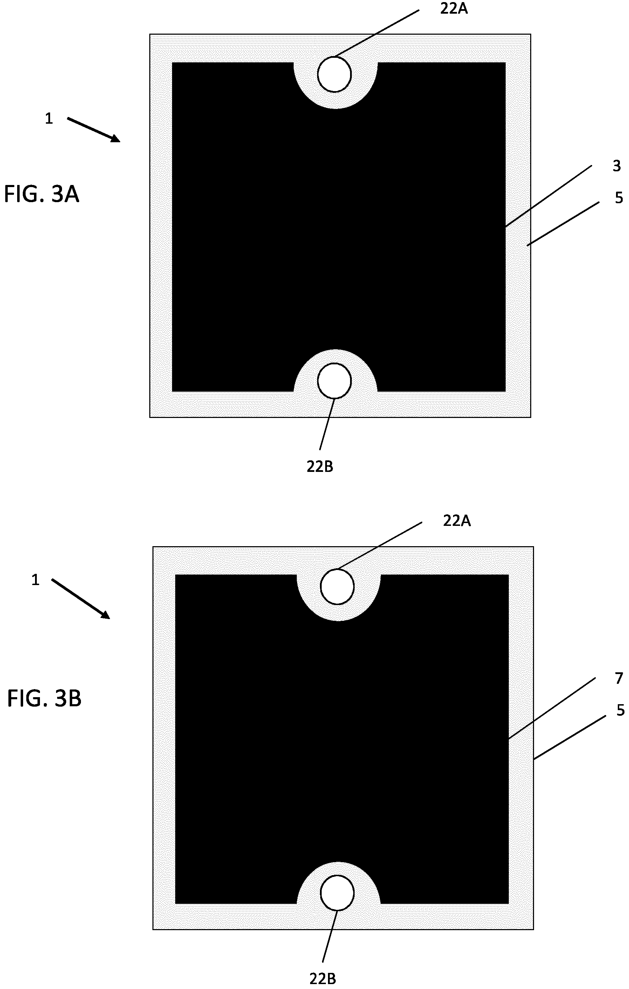

FIG. 3A is a plan view of the air side of the electrolyzer cell 1, and FIG. 3B is a plan view of the fuel side of the electrolyzer cell 1 according to various embodiments of the present invention. Referring to FIGS. 1A, 2A, 3A, and 3B, the electrolyzer cell 1 may include an inlet fuel hole 22A, an outlet fuel hole 22B, the electrolyte 5, and the air-side electrode 3. The air-side electrode 3 may be disposed on the air side of the electrolyte 5. The fuel-side electrode 7 may be disposed on an opposing fuel (e.g., water) side of the electrolyte 5.

The fuel holes 22A, 22B may extend through the electrolyte 5 and may be arranged to overlap with the fuel holes 22A, 22B of the interconnects 10, when assembled in the electrolyzer cell stack 100. The air-side electrode 3 may be printed on the electrolyte 5 so as not to overlap with the ring seals 20 and the peripheral seals 24 when assembled in the electrolyzer cell stack 100. The fuel-side electrode 7 may have a similar shape as the air-side electrode 3. The fuel-side electrode 7 may be disposed so as not to overlap with the frame seal 26, when assembled in the stack 100. In other words, the electrodes 3 and 7 may be recessed from the edges of the electrolyte 5, such that corresponding edge regions of the electrolyte 5 may directly contact the corresponding seals 20, 24, 26.

In one embodiment, electrolyzer cell stack 100 may only be operated in the electrolysis mode. Thus, the electrolyzer cell stack 100 is not operated in a fuel cell mode to generate power from fuel and air provided to fuel-side and air-side electrodes, respectively. Alternatively, the electrolyzer cell stack 100 may comprise a solid oxide regenerative (i.e., reversible) fuel cell (SORFC) stack. SORFCs can be operated in a fuel cell (FC) mode (e.g., power generation mode) in order to generate electricity from fuel and air provided to fuel-side and air-side electrodes, respectively, and may be operated in an electrolyzer cell (EC) mode (e.g., electrolysis mode) in order to produce hydrogen and oxygen from water/steam provided to the fuel-side electrode 7. In the FC mode, oxygen ions are transported from the air-side (e.g., cathode) electrode 3 to the fuel-side (e.g., anode) electrode 7 of the SORFC to oxidize the fuel (e.g., hydrogen and/or hydrocarbon fuel, such as natural gas) and to generate electricity. In EC mode, a positive potential is applied to the air side of the cell, and oxygen ions are transported from the water/steam at the fuel-side electrode 7 through the electrolyte 5 to the air-side electrode 3. Thus, water is electrolyzed into hydrogen at the fuel-side electrode 7 and oxygen at air-side electrode 3.

The air-side electrode 3 and the fuel-side electrode 7 of a SORFC respectively operate as a cathode and an anode during FC mode, and respectively operate as an anode and a cathode during EC mode (i.e., a FC mode cathode is an EC mode anode, and a FC mode anode is an EC mode cathode). Accordingly, the SORFCs described herein may be referred to as having air-side electrodes and fuel-side electrodes.

During the EC mode, water/steam in the fuel stream is reduced (H₂O + 2e⁻→O²- + H₂) to form H₂ gas and O²⁻ ions, the O²⁻ ions are transported through the solid electrolyte, and then oxidized on the air-side electrode (O²⁻ oxidized to O₂) to produce molecular oxygen. Since the open circuit voltage for a SORFC operating with air and wet fuel (e.g., hydrogen and/or reformed natural gas) may be from about 0.9 to 1.0V (depending on water content), the positive voltage applied to the air-side electrode in EC mode increases the cell voltage to typical operating voltages from about 1.1 to 1.5V.

SOEC air-side electrode materials that contain strontium, such as lanthanum strontium cobalt ferrite (LSCF), may release mobile strontium (Sr) at sufficiently high temperatures. The strontium reacts with zirconia-based electrolyte materials (e.g., YSZ, ScSZ, etc.) to form a highly insulating SrZrO₃ phase. This strontium - zirconia reaction can be prevented or reduced in two ways. First, the SOECs may be split-fired (i.e., undergo high temperature processing in multiple steps). During the split firing, the air-side electrode is fired (i.e., sintered) separately from the fuel-side electrode and separately from the electrolyte. Specifically, during the split-firing, the zirconia containing solid oxide electrolyte and/or Sr free electrode materials that are located in contact with the electrolyte are debound (i.e., debindered during a low temperature heating to remove the binder from these materials) and sintered in an initial higher temperature firing step, and Sr containing electrode materials are subsequently applied to the cell (e.g., to the electrolyte), debound, and sintered in a subsequent lower temperature firing step, at which Sr is relatively immobile and does not reach the electrolyte. However, the various split-firing processes can be time-consuming, difficult-to-manage, and the throughput of SOEC cell manufacturing can be limited.

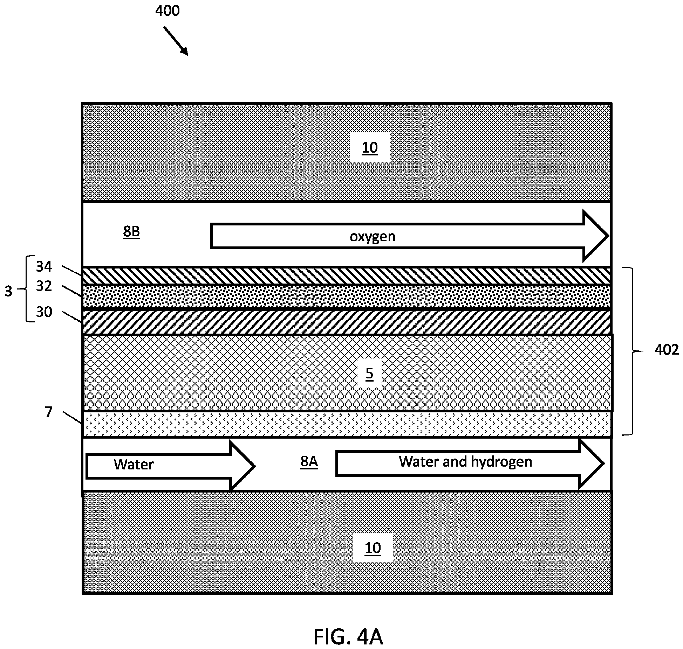

FIG. 4A is a cross-sectional view of a SOEC stack portion 400 including a SOEC 402 according to various embodiments of the present invention. The SOEC 402 may comprise a SOEC, a SORFC or a solid oxide fuel cell (SOFC). While the stack portion 400 is described in the embodiments below as an electrolyzer cell stack, it should be noted that it may be a fuel cell stack or a reversible fuel cell stack instead. While the SOEC 402 is described in the embodiments below as an electrolyzer cell, it should be noted that it may be a fuel cell (e.g., SOFC) or a reversible fuel cell (e.g., SORFC) instead.

Referring to FIG. 4A, the electrolyzer cell stack portion 400 includes a SOEC 402 disposed between two interconnects 10. The SOEC 402 may operate only in the electrolysis mode or may operate in both fuel cell and electrolysis modes (e.g., the SOEC 402 may comprise a SORFC). The SOEC 402 includes a solid oxide electrolyte 5, an air-side electrode 3 disposed on an air side of the electrolyte 5, and a fuel-side electrode 7 disposed on a fuel side of the electrolyte 5. Air may be provided to the air-side electrode 3 by air channels 8B in the interconnect 10, and fuel may be provided to the fuel-side electrode 7 by fuel channels 8A in the interconnect 10 while operating in a fuel cell mode, while water/steam may be provided to the fuel-side electrode 7 by fuel channels 8A in the interconnect 10 while operating in the electrolysis mode.

Various materials may be used for the solid oxide electrolyte 5, the fuel-side electrode 7, and air-side electrode 3. In various embodiments, the electrolyte 5 may include an ionically conductive material or phase, such as a stabilized zirconia, for example scandia-stabilized zirconia (SSZ), yttria-stabilized zirconia (YSZ), scandia-ceria-stabilized zirconia (SCSZ), scandia-ceria-yttria-stabilized zirconia (SCYSZ), scandia-ceria-ytterbia-stabilized zirconia (SCYbSZ), or the like. In some embodiments, the electrolyte 5 may comprise a material represented by the formula: (ZrO₂)_{1-w-x-z}(Sc₂O₃)_{w}(CeO₂)ₓ(Y₂O₃)ₐ(Yb₂O₃)_{b}, wherein 0.09 ≤ w ≤ 0.11, 0 < x ≤ 0.0125, a + b = z, and 0.0025 ≤ z ≤ 0.0125. In some embodiments, the electrolyte 5 may comprise (ZrO₂)_{0.88}(Sc₂O₃)_{0.1}(CeO₂)_{0.01}(Yb₂O₃)_{0.01} or (ZrO₂)_{0.88}(Sc₂O₃)_{0.1}(CeO₂)_{0.01}(Y₂O₃)_{0.01}. Alternatively, the electrolyte 5 may comprise (ZrO₂)_{0.89}(Sc₂O₃)_{0.1}(CeO₂)_{0.01}.

The fuel-side electrode 7 may comprise a cermet layer comprising a metal-containing phase and a ceramic phase. The metal-containing phase may include a metal catalyst, such as nickel (Ni), cobalt (Co), copper (Cu), alloys thereof, or the like, which operates as an electron conductor. The metal catalyst may be in a metallic state or may be in an oxide state. For example, the metal catalyst forms a metal oxide when it is in an oxidized state. Thus, the fuel-side electrode 7 may be annealed in a reducing atmosphere prior to operation of the electrolyzer cell 1, to reduce the oxidized metal catalyst to a metallic state. In one embodiment, the metal-containing phase may be comprised entirely of nickel in a reduced state. This nickel-containing phase may form nickel oxide when it is in an oxidized state. Thus, the fuel-side electrode 7 is preferably annealed in a reducing atmosphere prior to operation to reduce the nickel oxide to nickel.

The ceramic phase of the fuel-side electrode 7 may include, but is not limited to gadolinia-doped ceria (GDC), samaria-doped ceria (SDC), ytterbia-doped ceria (YDC), scandia-stabilized zirconia (SSZ), ytterbia-ceria-scandia-stabilized zirconia (YbCSSZ), or the like. In the case of YbCSSZ, scandia may be present in an amount equal to 9 to 11 mol %, such as 10 mol %, ceria may present in amount greater than 0 (e.g., at least 0.5 mol %) and equal to or less than 2.5 mol %, such as 1 mol %, and at least one of yttria and ytterbia may be present in an amount greater than 0 and equal to or less than 2.5 mol %, such as 1 mol %.

The fuel-side electrode 7 may include from about 10 wt.% to about 90 wt.%, such as about 40 wt.% to about 60 wt.%, of the metal-containing phase described above, and from about 10 wt.% to about 90 wt.%, such as about 40 wt.% to about 60 wt.%, of the ceramic phase.

Furthermore, if desired, an additional contact or current collector layer may be placed over the fuel-side electrodes 7. For example, a Ni or nickel oxide contact layer may be formed on the fuel-side electrode 7.

The air-side electrode 3 may include an optional barrier layer 30 located directly on an air side of the electrolyte 5, a functional layer 32 located on the barrier layer 30 (or directly on the air side of the electrolyte 5 if the barrier layer 30 is omitted), and a current collector layer 34 disposed on the functional layer 32. Thus, the functional layer 32 is located between the electrolyte 5 (or the barrier layer 30 if present) and the current collector layer 34.

The barrier layer 30 may be sintered to the air side of the electrolyte 5. The barrier layer 30 may be comprised of a single-phase ionic or majority-ionic conductor, and functions in part to prevent electrochemical delamination. The barrier layer 30 may comprise a doped ceria material. For example, the barrier layer may comprise from about 95 weight percent (wt.%) to about 100 wt.% of the doped ceria material, based on the total weight of the barrier layer 30. The doped ceria material may include samaria-doped ceria (SDC), gadolinia-doped ceria (GDC) and/or lanthana doped ceria (LDC).

The SDC portion may be represented by the formula: Ce₁₋ₓSmₓO_{2-d}, where x ranges from 0.05 to 0.4. For example, specific SDC materials may be represented by the formulas: Ce_{0.8}Sm_{0.2}O_{2-d}, Ce_{0.9}Sm_{0.1}O_{2-d}, and Ce_{0.7}Sm_{0.3}O_{2-d}, where d ranges from 0 to 0.2, such as from 0 to 0.1.

The GDC portion may be represented by the formula Ce₁₋ₓGdₓO_{2-d}, where x ranges from 0.05 to 0.3 and d ranges from 0 to 0.2, such as from 0 to 0.1. For example, specific GDC materials may be represented by the formulas: Ce_{0.9}Gd_{0.1}O_{2-d}, Ce_{0.8}Gd_{0.2}O_{2-d}, and Ce_{0.7}Gd_{0.3}O_{2-d}, where d ranges from 0 to 0.2, such as from 0 to 0.1. The LDC portion may be represented by the formula Ce₁₋ₓLaₓO_{2-d}, where x ranges from 0.05 to 0.6 and d ranges from 0 to 0.2, such as from 0 to 0.1.

The functional layer 32 may be comprised of a single-phase mixed-ionic electronic conductor (MIEC), a composite of a MIEC with a majority-ionic conductor, or a composite of a majority-ionic conductor with a majority-electronic conductor, the function of which is, in part, to facilitate an oxygen evolution reaction. The functional layer 32 may include a mixture of an electrically conductive perovskite metal oxide material and doped ceria material. The electrically conductive material may comprise an electrically conductive strontium containing perovskite material, such as lanthanum strontium manganite (LSM), lanthanum strontium cobalt ferrite (LSCF), lanthanum strontium cobaltite (LSC), lanthanum strontium cobalt manganite (LSCM), lanthanum strontium ferrite (LSF), lanthanum strontium cobalt nickel oxide (LSCN) (e.g., La_{0.85}Sr_{0.15}Co_{0.9}Ni_{0.1}O₃ ), combinations thereof, or the like. In some embodiments, the electrically conductive material may preferably comprise LSM and/or LSCF. For example, the functional layer 32 may include from about 10 wt.% to about 90 wt.%, such as about 40 wt.% to about 60 wt.%, of the electrically conductive material described above, and from about 10 wt.% to about 90 wt.%, such as about 40 wt.% to about 60 wt.%, of the doped ceria material.

In various embodiments, the functional layer 32 may include the LSM as the electrically conductive material. The LSM may be represented by the formula: (La_{1-z} Sr_{z})_{q}MnO_{3-d}, wherein z ranges from 0.1 to 0.4, q ranges from 0.94 to 1, such as 0.96 to 1, and d is the equilibrium oxygen deficiency which ranges from 0 to 0.2. For example, the LSM may comprise La_{0.8}Sr_{0.2}MnO_{3-d} or A-site deficient LSM, such as (La_{0.8}Sr_{0.2})_{0.98}MnO_{3-d}, wherein d ranges from 0 to 0.1.

In some embodiments, the functional layer may include the LSCF as the electrically conductive material. The LSCF may be represented by the formula: (LaₓSr₁₋ₓ)_{y}Co_{z}Fe_{1-z}O_{3-δ} , wherein x ranges from 0.4 to 0.8, y ranges from 0.94 to 1.0, z ranges from 0.01 to 0.99, and δ is the equilibrium oxygen deficiency which ranges from 0 to 0.1. For example, the LSCF may comprise La_{0.58}Sr_{0.4}Co_{0.2}Fe_{0.8}O_{3-δ}, (La_{0.6}Sr_{0.4})_{0.98}Co_{0.2}Fe_{0.8}O_{3-δ}, or (La_{0.6}Sr_{0.4})_{0.95}Co_{0.2}Fe_{0.8}O₃₋₆, where δ is the equilibrium oxygen deficiency.

The barrier layer 30 and the functional layer 32 may include the same doped ceria material or different doped ceria materials. For example, the barrier layer 30 may include GDC and the functional layer 32 may include LSM and GDC, or LSM and SDC. In other embodiments, the barrier layer 30 may include SDC and the functional layer 32 may include LSM and SDC, or LSM and GDC. In other embodiments, the barrier layer may include SDC and the functional layer may include LSCF and SDC, or LSCF and GDC.

The current collector layer 34 may be comprised of a metal or metal oxide electronic conductor, a single phase MIEC, or composites of MIEC, majority-electronic conductors, and/or majority-ionic conductors; the function of which is, in part, to transport electronic charge and maintain electrical contact with the interconnect 10. The current collector layer 34 may include an electrically conductive material, such as an electrically conductive perovskite, such as LSM. However, other electrically conductive perovskites, such as LSC, LSCM, LSCF, LSF, LSCN, etc., or metals, such as Pt, may also be used.

According to various embodiments, the air-side electrode includes a strontium getter material, which traps strontium, and prevents or reduces diffusion of strontium from the functional layer 32 and/or the current collector layer 34 of the air-side electrode 3 to the electrolyte 5. Thus, the getter material prevents or reduces reaction of the strontium with the zirconia containing electrolyte 5, and generation of the insulating strontium zirconium oxide insulating phase in the electrolyte 5.

In one embodiment, the solid oxide electrochemical cell (e.g., SOEC, SORFC or SOFC) 402 which includes the strontium getter may be co-fired. The electrochemical cells which are co-fired undergo a high temperature processing in a single step in which the air-side electrode and the fuel-side electrodes are sintered in a single heating step. The strontium getter prevents or reduces strontium diffusion into the electrolyte during the single high temperature sintering step (which may be conducted above the temperature at which strontium in the air-side electrode without the getter material becomes mobile). In an alternative embodiment, the solid oxide electrochemical cell (e.g., SOEC, SORFC or SOFC) 402 which includes the strontium getter material may be split-fired, as described above. Accordingly, the embodiments solve the problem of Sr reaction with the zirconia containing electrolyte by the inclusion of a strontium getter material in the air-side electrode, which preferentially reacts with mobile Sr before the Sr reacts with the zirconia-based electrolyte material to form the undesirable insulating phase during electrode sintering.

In a first embodiment, relatively small amounts (greater than 0 wt% and equal or less than 10 wt%) of a Sr getter material with strong chemical affinity for Sr are added to one or multiple air-side electrode 3 layers (e.g., the barrier layer 30, functional layer 32, and/or current collector layer 34) during wet processing of the green air-side electrode body, which includes but is not limited to, ink synthesis, slurry preparation, spray vehicle, tape casting, etc. For example, the Sr getter material may comprise a metal oxide material (e.g., TiO₂) powder that is added to the air-side electrode ink during the ink synthesis process either by physical mixing of a getter material powder with one or more air-side electrode powders prior to addition of organic ink components to the mixed powders, or mixing the getter material powder into organic ink solvent prior to or after addition of the one or more air-side electrode powders to the organic ink solvent. For example, the Sr getter material is added to the ink used to form the functional layer 32.

Although not conclusive, it is believed that TiO₂ is a Sr getter material which reacts with Sr at high temperatures with similar readiness to which Sr reacts with ZrO₂ of the electrolyte 5. The added TiO₂ getter reacts with Sr during high temperature processing (e.g., during firing/sintering) to form a phase which effectively bonds to Sr so that the Sr does not diffuse to and react with the electrolyte 5. In one embodiment, the functional layer 32 comprises a strontium containing metal oxide material (e.g., LSCF, etc.) and the strontium getter material comprises a strontium getter metal oxide phase (e.g., titanium oxide containing phase) embedded in the strontium containing metal oxide material. Although not conclusive, it is believed that the strontium getter metal oxide phase may comprise a strontium titanate phase that is embedded in the LSCF matrix phase.

Some (not exhaustive) examples of the first embodiment will now be provided. In one aspect of the first embodiment, the Sr getter material comprises titanium oxide, such as titanium dioxide (TiO₂). Any of the following materials can contain >0 wt% and ≤10 wt% TiO₂, such as 1 to 10 wt% TiO₂, and preferably 2-5 wt% TiO₂, where the TiO₂ particle size ranges between d₁₀ > 20 nm and d₉₅ < 10 µm, and which are sintered together with TiO₂ in a temperature range between 800°C and 1400°C, such as 1150 to 1250°C:
- SDC: Ce₁₋ₓSmₓO_{2-δ} with 0.05 ≤ x ≤ 0.4;
- GDC: Ce₁₋ₓGdₓO_{2-δ} with 0.05 ≤ x ≤ 0.3;
- LDC: Ce₁₋ₓLaxO_{2-δ} with 0.05 ≤ x ≤ 0.6;
- LSCF: (LaₓSr₁₋ₓ)_{y}Co_{z}Fe_{1-z}O_{3-δ}, wherein x ranges from 0.4 ≤ x ≤ 0.8, y ranges from 0.90 ≤ y s1.0, z ranges from 0.01 ≤ z ≤ 0.99, and δ is an equilibrium oxygen deficiency constant ranging from 0 ≤ δ ≤ 0.1; specific compositions may include (La_{0.8}Sr_{0.2})_{0.98}Co_{0.2}Fe_{0.8}O₃₋₆, and (La_{0.8}Sr_{0.2})_{0.95}Co_{0.2}Fe_{0.8}O_{3-δ};
- LSC: (LaₓSr₁₋ₓ)_{y}CoO_{3-δ}, wherein x ranges from 0.4 ≤ x ≤ 0.8, y ranges from 0.90 ≤ y s1.0, and δ ranges from 0 ≤ δ ≤ 0.1;
- LSF: (LaₓSr₁₋ₓ)_{y}FeO_{3-δ}, wherein x ranges from 0.4 ≤ x ≤ 0.8, y ranges from 0.90 ≤ y ≤ 1.0, and δ ranges from 0 ≤ δ ≤ 0.1; specific compositions may include (La_{0.7}Sr_{0.3})_{0.95}FeO_{3-δ}, (La_{0.6}Sr_{0.4})_{0.95}FeO_{3-δ}, (La_{0.7}Sr_{0.3})_{0.92}FeO_{3-δ}, (La_{0.8}Sr_{0.2})_{0.95}FeO_{3-δ}, (La_{0.8}Sr_{0.2})_{0.97}FeO_{3-δ} and La_{0.8}Sr_{0.15}FeO_{3-δ}
- LSCrF: (LaₓSr₁₋ₓ)_{y}Cr_{z}Fe_{1-z}O_{3-δ} wherein x ranges from 0.5 ≤ x ≤ 0.9, y ranges from 0.92 ≤ y ≤ 1.0, z ranges from 0.2 ≤ z ≤ 0.8 and δ ranges from 0 ≤ δ ≤ 0.1; specific compositions include (La_{0.8}Sr_{0.2})_{0.95}Cr_{0.5}Fe_{0.5}O_{3-δ;}
- LSCrM: (LaₓSr₁₋ₓ)_{y}Cr_{z}Mn_{1-z}O_{3-δ} wherein x ranges from 0.5 ≤ x ≤ 0.9, y ranges from 0.92 ≤ y ≤ 1.0, z ranges from 0.2 ≤ z ≤ 0.8 and δ ranges from 0 ≤ δ ≤ 0.1; specific compositions may include (La_{0.75}Sr_{0.25})Cr_{0.5}Mn_{0.5}O_{3-δ};
- STFC: Sr(TiₓFe_{y}Co_{z})O_{3-δ}, wherein x ranges from 0.25 ≤ x ≤ 0.35, y ranges from 0.52 ≤ y ≤ 0.75, z ranges from 0 ≤ z ≤ 0.17, and δ ranges from 0.1 ≤ δ ≤ 0.39; specific compositions may include Sr(Ti_{0.3}Fe_{0.7})O_{3-δ}, Sr(Ti0.3Fe0_{0.63}Co_{0.07})O_{3-δ}, and Sr(Ti_{0.3}Fe_{0.55}Co_{0.15})O_{3-δ}. While STFC contains titanium, the strontium getter material (e.g., TiO₂) is added to STFC to act as a strontium getter.

Alternatively, any of the air-side electrode materials listed above may contain one or more of the following Sr getter materials instead of or in addition to the titanium dioxide: TiO (i.e., titanium (II) oxide), TiOₓ where 1 < x <2, MoO₂, MoO₃, FeO, Fe₃O₄, Fe₂O₃, CoO, Co₂O₃, CoO₃, NbO, NbO₂, Nb₂O₅, and/or ZrO₂. These Sr getter materials may be provided in an amount ranging from >0 wt% and ≤10 wt% such as 1 to 10 wt%,and preferably 2-5 wt%. The getter material particle size may range between d₁₀ > 20 nm and d₉₅ < 10 µm. The Sr getter material is sintered together with the air-side electrode material in a temperature range between 800°C and 1400°C, such as 1150 to 1250°C. While LSCF contains iron and cobalt, the iron or cobalt strontium getter material (e.g., FeO, Fe₃O₄, Fe₂O₃, CoO, Co₂O₃, and/or CoOs) is added to LSCF to act as a strontium getter.

Any combination of multiple Sr getter materials described above (e.g., Fe₂O₃ and TiO₂) where the total amount of getter material > 0 wt% and ≤10 wt% may be added to the air-side electrode material, such as to the functional layer 32 of the air-side electrode 3. In one embodiment, any combination of the above described multiple Sr getter materials may be provided into the air-side electrode 3, where the Sr getter material powders are thermally processed prior to adding them to the air-side electrode ink such that getter material powders partially inter-diffuse and/or react to create complex Sr getter oxides (e.g., binary, ternary oxides, such as iron-titanium oxide or iron-cobalt-titanium oxide).

In alternative embodiment, rather than adding metal oxide Sr getter powders to the air-side electrode ink, a different metal compound than a metal oxide may be added to the air-side electrode ink and then decomposed to a metal oxide. For example, a metal nitrate may be added to air-side electrode ink and then chemically and/or thermally decomposed to a metal oxide Sr getter material. In one exemplary embodiment, >0 wt% and ≤3 wt% of Fe(NO₃)₃, Co(NO₃), and/or Ni(NO₃)₂ is added to the air-side electrode ink. The one or more metal nitrates chemically decompose during high temperature processing (e.g., during sintering) in air to leave a stable metal oxide (e.g., Fe(NO₃)₃ → Fe₂O₃) which then form a metal oxide Sr getter material which binds with mobile Sr.

While metal nitrates are described above, other non-oxide metal compounds which, in part, decompose and form a metal oxide, may be added to the air-side electrode ink. For example, >0 wt% and ≤3 wt% of Fe, Co, Ni, Ti, Mn, Ce, La, Zr and/or Nb carbonates, hydroxides, acetates, oxylates, and/or other compounds which, in part, decompose and form a metal oxide, are added to the air-side electrode ink. The added compounds chemically decompose during high temperature processing (e.g., sintering) in air to leave a stable metal oxide Sr getter material which then binds with mobile Sr.

Some non-exhaustive example configurations of the combination of the first embodiment and the second embodiment described below (which includes lanthanum nickel ferrite ("LNF") and lanthanum nickelate "(LNO") materials) include a getter material (e.g., TiO₂) in the current collector layer 34, such as:
- LSCF + TiO₂ current collector layer 34 on top of composite LNF:SDC functional layer 32, where current collector layer 34 includes Sr and the getter material;
- LSCF + TiO₂ current collector layer 34 on top of composite LNO:LDC functional layer 32, where LDC is lanthana doped ceria, Ce₁₋ₓLaₓO_{2-δ}with 0.05 ≤ x ≤ 0.6, and where current collector layer 34 includes Sr and the getter material; and
- LSCF + TiO₂ current collector layer 34 on top of composite LNO:SDC functional layer 32, where current collector layer 34 includes Sr and getter material.

Some other non-exhaustive example configurations of the combinations of the first and second embodiments include a Sr getter material (e.g., TiO₂) in the functional layer 32, such as:
- LSCF current collector layer 34 on top of composite LNF:SDC + TiO₂ functional layer 32, where current collector layer 34 includes Sr and functional layer 32 includes the Sr getter material;
- LSCF current collector layer 34 on top of composite LNO:LDC + TiO₂ functional layer 32, where current collector layer 34 includes Sr and functional layer 32 includes getter material;
- LSCF current collector layer 34 on top of composite LNO:SDC + TiO₂ functional layer 32, where current collector layer 34 includes Sr and functional layer 32 includes the getter material.

Yet some other non-exhaustive example configurations of the first embodiment include a getter material (e.g., TiO₂) in both the current collector layer 34 and the functional layer 32, such as:
- LNF current collector layer 34 on top of composite LSCF:SDC + TiO₂ functional layer 32, where functional layer 32 includes Sr and getter material; and
- LSCF + TiO₂ current collector layer 34 on top of composite LSCF:SDC +TiO₂ functional layer 32, where current collector layer 34 and functional layer 32 include both Sr and the getter material.

In the various embodiments, any combination of multiple cell layers (e.g., selected from barrier layer 30, functional layer 32, and/or current collector layer 34), each can be made from any of the above-described materials in combination with one or more getter materials. Additionally, or alternatively, any combination of the getter materials may be blended into the electrode layer and used individually or in combination with other electrode layers (i.e., the barrier layer 30, functional layer 32, and/or current collector layer 34).

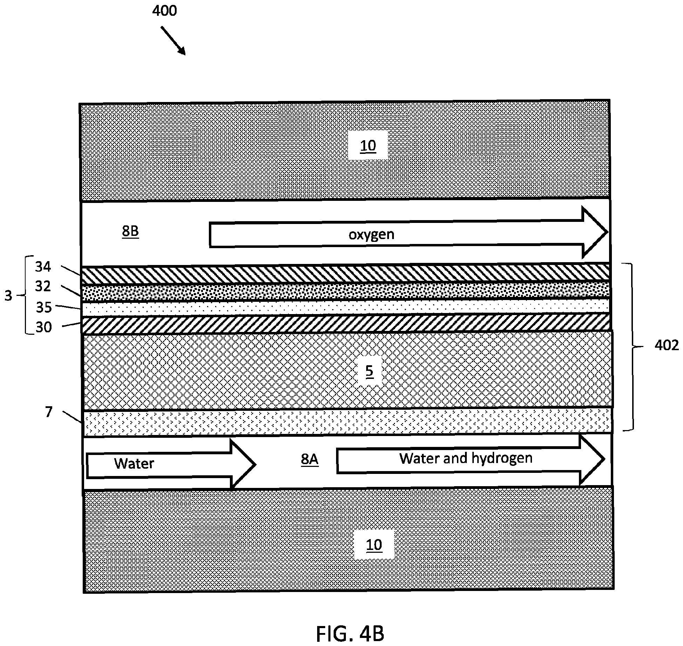

In a second embodiment illustrated in FIG. 4B, an additional separate Sr getter layer 35 is added to the air-side electrode 3. The Sr getter layer may have a thickness between 0.1 and 100 microns, such as 5 to 30 microns. The Sr getter layer 35 is deposited as a Sr-free layer. However, some of the Sr may diffuse out from the Sr containing air-side electrode 3 layer and become captured in the Sr getter layer 35 during cell sintering and/or operation. Preferably, the Sr getter layer 35 is located in the air-side electrode 3 in proximity to the electrolyte 5. For example, the Sr-free layer may be located between the electrolyte 5 and the Sr containing layer (e.g., a Sr containing functional layer 32 and/or a Sr containing current collector layer 34).

While the Sr getter layer 35 is shown in FIG. 4B as being located between the barrier layer 30 and the functional layer 32, in alternative configurations, the Sr getter layer 35 may be located on the air side surface of the electrolyte 5 (e.g., below the barrier layer 30 or instead of the barrier layer 30 if the barrier layer 30 is omitted), or between the functional layer 32 and the current collector layer 34, or between the current collector layer 34 and the electrolyte 5 (e.g., if the Sr getter layer 35 also functions as the functional layer 32). In this embodiment, the mobile Sr can react with and be incorporated into the Sr getter layer 35 rather than reacting with the electrolyte 5.

In this embodiment, the air-side electrode 3 is configured such that the Sr getter layer 35 is located between the Sr containing layer (e.g., the functional layer 32 and/or current collector layer 34) and the electrolyte 5. The electrochemically active material component of the Sr getter layer 35 reacts with mobile Sr originating from another air-side electrode 3 layer before the mobile Sr reaches the electrolyte 5. In this embodiment the reaction occurs without the addition of the Sr getter material (e.g., titanium dioxide) into the Sr containing air-side electrode 3 layer (e.g., a Sr containing functional layer 32 and/or a Sr containing current collector layer 34). Some (not exhaustive) examples of the second embodiment will now be provided.

Any of the following materials can be used as a distinct Sr getter layer 35 in combination with Sr-containing layers (e.g., 32 and/or 34) in the air-side electrode 3 that are prone to release mobile Sr (e.g., LSCF, LSCrF, etc.):
- LNF: LaₓNi_{y}Fe_{1-y}O_{3-δ} wherein x ranges from 0.9 ≤ x s1.0, y ranges from 0.3 ≤ x ≤ 1.0, and δ ranges from 0 ≤ δ ≤ 0.1; specific compositions may include LaNi_{0.4}Fe_{0.6}O_{3-δ}. LaNi_{0.6}Fe_{0.4}O_{3- δ};
- LNO: La₂NiO_{x- δ} wherein δ ranges from 0 ≤ δ ≤ 0.1; specific compositions may include La₂NiO₄;
- LCO: LaCoO_{3-δ} wherein δ ranges from 0 ≤ δ ≤ 0.1.

The Sr getter layer 35 is sintered together (i.e., co-fired) with the Sr-containing layers (e.g., 32 and/or 34) of the air-side electrode 3 in a temperature range between 800°C and 1400°C, such as 1150 to 1250°C.

In one embodiment, any composite of the above materials may be provided with a variety of material(s) where the volume fraction of the Sr getter phase(s) ≥ 0.3, such as ≥ 0.5. Thus, the Sr getter layer 35 may include at least 30%, such as at least 50% volume fraction of LNF, LNO and/or LCO, and 50% or less volume fraction of another material, such as a doped ceria (e.g., SDC, GDC and/or LDC). For example, the Sr getter layer 35 may comprise an LNF:SDC composite material which functions as the functional layer 32, which is located below a Sr containing current collector layer (e.g., LSCF current collector layer) 34.

Although described as different embodiments, combinations of the first and second embodiments as described herein may be used. For example, the Sr getter may be added to one of the Sr containing layers (e.g., functional layer 32 and/or current collector layer 34) of the first embodiment, and in addition also be provided as a separate Sr getter layer 35 of the second embodiment.

Accordingly, the problem of Sr reaction with electrolyte materials is solved by providing a Sr getter material either in the Sr containing layer of the air-side electrode 3 and/or as separate Sr getter layer 35 in the air-side electrode 3. The air-side electrode 3 and the fuel-side electrode 7 of the electrochemical cell 402 may be co-fired in a single firing process or split-fired at a temperature at which most or all of the mobile Sr is captured by the Sr getter and does not diffuse into the electrolyte 5 for the duration of the firing. Additionally or alternatively, the barrier layer 30 may also be included to prevent or reduce Sr reaching the electrolyte 5.

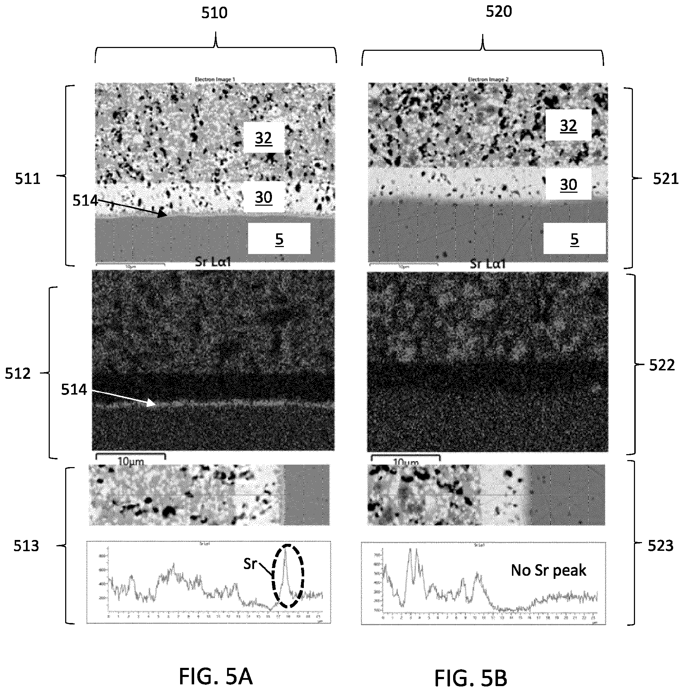

FIGS. 5A and 5B illustrate a non-limiting example of the prevention or reduction of SrZrOs formation in the electrolyte 5 according to the first embodiment of the present disclosure. Fig. 5A illustrates results from a comparative example SOEC 510 which includes an air-side electrode 3 containing a SDC barrier layer 30, a LSCF:SDC functional layer 32, and a LSCF current collector layer 34 (not shown) which are located above a SCYbSZ electrolyte 5 that is described above. No Sr getter is added to the comparative example SOEC 510.

FIG. 5B illustrates results from a first embodiment example SOEC 520 which includes an air-side electrode 3 containing a SDC barrier layer 30, a LSCF:SDC:TiO₂ functional layer 32, and a LSCF current collector layer 34 (not shown) which are located above a SCYbSZ electrolyte 5 that is described above. The functional layer 32 includes 5 wt% of the TiO₂ Sr getter added to the functional layer 32 during ink synthesis. Both air side electrodes 3 of the cells 510 and 520 are formed by ink screen-printing on the SCYbSZ electrolyte 5 followed by co-firing the air-side electrode 3 layers at 1220°C.

Scanning electron microscopy (SEM) cross-sectional micrograph 511 of the comparative example SOEC 510 illustrates a phase contrast indicative of SrZrOs region 514 formed at the barrier layer 30 - electrolyte 5 interface. The presence of the SrZrOa region 514 is confirmed by the strong Sr signal detected at this location using energy dispersive spectroscopy (EDS) at image 512 and plot (i.e., line scan) 513, which are indicative of SrZrOs formation.

Scanning electron microscopy (SEM) cross-sectional micrograph 521 of the first embodiment example SOEC 520 illustrates an absence of the SrZrOs region 514. Likewise, the EDS image 522 and plot (i.e., line scan) 523 provide no indication of SrZrOs region 514 formation in the exemplary SOEC 520, demonstrating the effectiveness of adding the Sr getter material to the Sr containing functional layer. Thus, TiO₂ addition (e.g., 3-5 wt.%) to the functional layer 32 layer having a mixture of LSCF:SDC appears to be sufficient to prevent the SrZrOs region 514 formation at the air surface of the electrolyte.

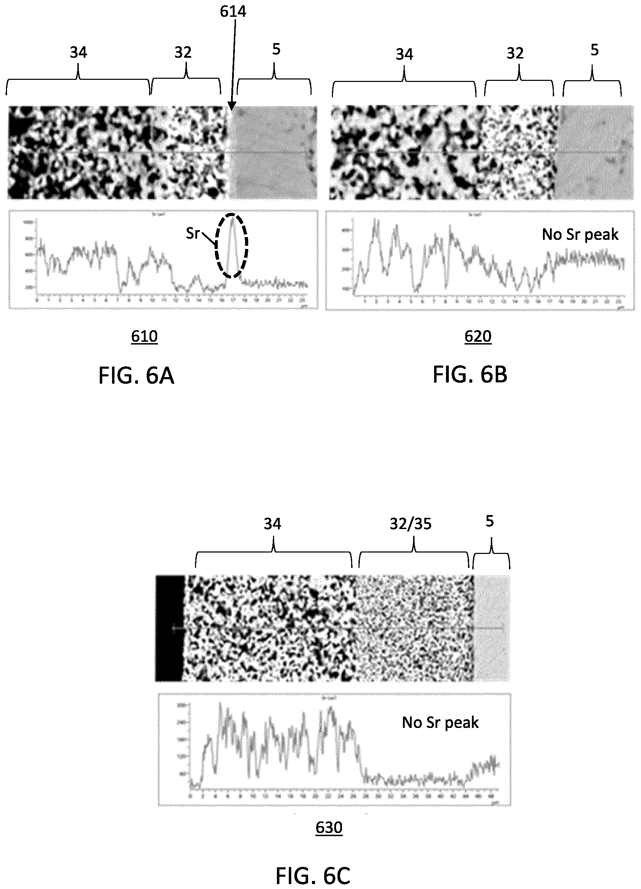

FIGS. 6A - 6C illustrate a non-limiting example of the prevention or reduction of SrZrOs formation in the electrolyte 5 according to the second embodiment of the present disclosure. The SEM micrographs and EDS plots (i.e., line scans) for the second comparative example SOEC cell 610, the third comparative SOEC cell 620 and the second embodiment SOEC cell 630 are illustrated in FIGS. 6A, 6B and 6C, respectively. All three SOEC cells 610, 620 and 620 include an air-side electrode containing a functional layer 32 and a current collector layer 34 printed on the SCYbSZ electrolyte 5 without an intervening barrier layer 30, and co-fired at 1100°C.

The second comparative SOEC 610 of FIG. 6A includes a LSCrF:SDC functional layer 32 and a LSCF current collector layer 34. The third comparative SOEC 620 of FIG. 6B includes a LSCrF:SDC functional layer 32 and a LSM current collector layer 34. The second exemplary SOEC 630 includes a LNF functional layer 32 and a LSCF current collector layer 34.

FIG. 6A illustrates the presence of the SrZrOs region 614 in the second comparative SOEC 610 between the functional layer 32 and the electrolyte 5, including a Sr peak at the air side surface of the electrolyte 5 in the EDS line scan. Although not conclusive, it is believed that mobile Sr from the LSCF current collector layer 34 diffuses through the functional layer which lacks a Sr getter to form the SrZrOa region 614 at the air surface of the electrolyte 5.

In contrast, there is no evidence of the presence of the SrZrOs region 614 between the functional layer 32 and the electrolyte 5 in the third comparative example SOEC 620 of FIG. 6B (e.g., there is no Sr peak in the EDS line scan). Although not conclusive, it is believed that mobile Sr ions originate from LSCF layers because the LSM current collector layer 34 and the LSCrF functional layer 32 did not produce the SrZrO₃ region 614 despite containing Sr in their compositions. While both LSM and LSCrF contain Sr, they are generally more stable than LSCF at the sintering temperature of 1100°C, and therefore, no indications of SrZrOa formation is observed, even in the absence of a Sr-free getter material. However, the LSM and LSCrF materials may have a somewhat inferior performance relative to LSCF material in a SOEC.

There is also no evidence of the presence of the SrZrOa region 614 between the functional layer 32 and the electrolyte 5 in the second embodiment example SOEC 630 of FIG. 6C (e.g., there is no Sr peak in the EDS line scan). Although not conclusive, it is believed that mobile Sr ions originating from the LSCF current collector layer 34 are not able to reach the electrolyte 5 through the LNF functional layer 32 (which also functions as the discrete Sr getter layer 35). Thus, a Sr-free functional layer 32 (LNF, LaNi_{0.6}Fe_{0.4}O₃) acts as a Sr getter layer 32 in combination with a LSCF (La_{0.8}Sr_{0.2})_{0.95}Fe_{0.8}Co_{0.2}O₃) current collector layer 34 in the absence of a barrier layer 30 during co-firing at 1100°C.

It will be apparent to those skilled in the art that various modifications and variations can be made in the getter approaches for prevention of Sr reaction with electrolytes of the present disclosure without departing from the spirit or scope of the invention. Thus, it is intended that the present invention cover the modifications and variations of this invention provided they come within the scope of the appended claims and their equivalents.

## Claims

1. A solid oxide electrochemical cell, comprising:
a solid oxide electrolyte;
a fuel-side electrode located on a first side of the solid oxide electrolyte; and
an air-side electrode located on a second side of the solid oxide electrolyte, the air-side electrode including a strontium getter material, a current collector layer and a functional layer located between the current collector layer and the second side of the solid oxide electrolyte.

2. The solid oxide electrochemical cell of claim 1, wherein the strontium getter material is located within the functional layer.

3. The solid oxide electrochemical cell of claim 2, wherein:
the functional layer comprises a strontium containing metal oxide material and the strontium getter material comprises a strontium getter metal oxide phase embedded in the strontium containing metal oxide material;
the strontium getter metal oxide phase comprises at least one of titanium oxide, MoO₂, MoO₃, FeO, Fe₃O₄, Fe₂O₃, CoO, Co₂O₃, CoO₃, NbO, NbO₂, Nb₂O₅, or ZrO₂ phase, and the strontium containing metal oxide material comprises lanthanum strontium cobalt ferrite; and
the strontium getter material comprises 1-10 wt.% of the functional layer.

4. The solid oxide electrochemical cell of claim 1, wherein the strontium getter material is located within the current collector layer.

5. The solid oxide electrochemical cell of claim 1, wherein:
the strontium getter material comprises a discrete strontium getter layer comprising at least 30 volume percent of the strontium getter material;
the discrete strontium getter layer is located between the solid oxide electrolyte and the current collector layer; and
the discrete strontium getter layer comprises at least one of: LaₓNi_{y}Fe_{1-y}O_{3-δ} wherein x ranges from 0.9 ≤ x ≤1.0, y ranges from 0.3 ≤ x ≤ 1.0, and δ ranges from 0 ≤ δ ≤ 0.1; La₂NiO_{x- δ} wherein δ ranges from 0 ≤ δ ≤ 0.1; or LaCoO_{3-δ} wherein δ ranges from 0 ≤ δ ≤ 0.1.

6. The solid oxide electrochemical cell of claim 1, wherein the functional layer consists essentially of the strontium getter material and the current collector layer comprises lanthanum strontium cobalt ferrite.

7. The solid oxide electrochemical cell of claim 1, wherein the solid oxide electrolyte includes zirconia, and the strontium getter material traps mobile strontium in the air-side electrode to reduce or prevent SrZrO₃ formation at the second surface of the solid oxide electrolyte.

8. The solid oxide electrochemical cell of claim 1, further comprising a doped ceria barrier layer located between the functional layer and the second side of the solid oxide electrolyte.

9. The solid oxide electrochemical cell of claim 1, wherein the solid oxide electrochemical cell comprises a solid oxide electrolyzer cell, a solid oxide fuel cell, or a solid oxide reversible fuel cell.

10. A method of making solid oxide electrochemical cell, comprising:
forming a fuel-side electrode on a first side of the solid oxide electrolyte; and
forming an air-side electrode on a second side of the solid oxide electrolyte, the air-side electrode including a strontium getter material, a current collector layer and a functional layer located between the current collector layer and the second side of the solid oxide electrolyte.

11. The method of claim 10, wherein the forming the air-side electrode comprises depositing the strontium getter material, the current collector layer and the functional layer using a wet deposition process and co-firing the strontium getter material, the current collector layer and the functional layer.

12. The method of claim 10, wherein the forming the fuel-side electrode comprises depositing the fuel-side electrode using a wet deposition process and co-firing the fuel-side electrode with the air-side electrode.

13. The method claim 10, wherein the forming the fuel-side electrode comprises depositing the fuel-side electrode using a wet deposition process and split-firing the fuel-side electrode separate from the air-side electrode.

14. The method of claim 10, wherein the strontium getter material comprises a metal oxide phase that is located within the functional layer.

15. The method of claim 10, wherein the strontium getter material comprises a discrete strontium getter layer comprising at least 30 volume percent of the strontium getter material.
